# EUROPEAN PATENT SPECIFICATION

(11) **EP 3 838 989 B1**
(45) Date of publication and mention of the grant of the patent: **30.07.2025**
(21) Application number: 19849694.5
(22) Date of filing: 01.08.2019
(51) Int. Cl.: C08L 83/04, C08G 77/14, C08G 77/06, C09D 183/04, C09D 5/00, C09D 7/20, C08K 5/06, C03C 17/30

(54) **COMPOSITION INCLUDING ORGANOPOLYSILOXANE COMPOUND, PRODUCTION METHOD THEREFOR, COATING MATERIAL, AND COATED ARTICLE**
ZUSAMMENSETZUNG MIT EINER ORGANOPOLYSILOXANVERBINDUNG, VERFAHREN ZU IHRER HERSTELLUNG, BESCHICHTUNGSMATERIAL UND BESCHICHTETER GEGENSTAND
COMPOSITION COMPRENANT UN COMPOSÉ ORGANOPOLYSILOXANE, SON PROCÉDÉ DE PRODUCTION, MATÉRIAU DE REVÊTEMENT ET ARTICLE REVÊTU

(30) Priority: 17.08.2018 JP 2018153541
(43) Date of publication of application: 23.06.2021
(73) Proprietor: SHIN-ETSU CHEMICAL CO., LTD., Tokyo 100-0004 (JP)
(72) Inventor: FUJIMOTO, Takuya, Annaka-shi, Gunma 379-0224 (JP); NEGISHI, Kazuyuki, Annaka-shi, Gunma 379-0224 (JP)
(74) Representative: Mewburn Ellis LLP
(86) International application number: PCT/JP2019/030316
(87) International publication number: WO 2020/036074

(56) References cited:
- EP-A1- 1 058 274
- EP-A2- 1 148 105
- JP-A- 2001 164 113
- JP-A- 2011 084 639
- JP-A- 2014 141 585
- JP-A- 2018 012 806
- JP-A- 2019 026 693
- US-A- 5 496 402
- US-A1- 2011 091 693
- US-A1- 2014 205 951

## Description

### TECHNICAL FIELD

The present invention relates to a composition that includes an organopolysiloxane compound and a glycol ether solvent, to a method of preparing the composition, to a coating material, and to a coated article having a cured film composed thereof.

### BACKGROUND ART

In recent years, there has been a growing desire for environmentally friendly coatings aimed at reducing or mitigating impacts on human beings and ecology and on the global environment. A need thus exists for coatings which do not contain specific volatile organic compounds (VOCs) such as toluene, xylene and ethylbenzene that generate photochemical smog and are in other ways deleterious to the environment and that are also a cause of sick building syndrome.

In general, organosiloxane-containing coatings often use solvents such as toluene and xylene (TX solvents) because of their high solvency. However, TX solvents have a large impact on the environment and, because of their high volatility, also tend to cause cracks and uneven coating to arise in the applied coat.

The environmentally friendly solvent ethylene glycol, owing to its low impact on humans and nature and the fact that it is easy to handle, is a TX-free solvent whose usage lately has been trending upwardly. Ethylene glycol also has a high boiling point, as a result of which the adverse effect on the human body due to exposure to solvent gases is limited. In addition, ethylene glycol has a low volatility and so is very easy to work with, and cracks and uneven coating do not readily arise in the applied coat, making it suitable for use as a solvent in coatings.

Separately, with regard to organopolysiloxanes that have polymerizable functional groups, from the standpoint of hardness and flexibility, organopolysiloxanes having divalent or trivalent siloxane bonds on the skeleton are often used as the chief raw material in coatings. In particular, trivalent siloxane bonds are essential in terms of hardness and adhesion to the underlying material.

The condition at the surface of the applied coat differs according to the molecular weight of the organopolysiloxane. When the molecular weight is small, the ratio of the number of polymerizable functional groups is large, which becomes a cause of crack formation over time. When the molecular weight is large, the ratio of the number of polymerizable functional groups is small, leading to poor adhesion and becoming a cause of low hardness and low scuff resistance.

JP-A 2008-537007 discloses examples of low-VOC aqueous latex coatings in which an oligomeric ethylene glycol derivative is used as the solvent. The oligomeric ethylene glycol functions both as a film-forming solvent and a thaw stabilizer. Coats having an excellent scuff resistance can reportedly be obtained from such coatings. JP-A 2005-200546 discloses that a good scuff resistance and adhesion can be obtained in silicone resin composition films for which the ratio of condensation-curable functional groups falls in a specific range. JP 2001164113 A discloses a composition for film formation comprising an organopolysiloxane compound and a propylene glycol monoalkyl ether solvent, such as propylene glycol monopropyl ether and propylene glycol monomethyl ether. JP 2014141585 A discloses a composition comprising a thermal crosslinking accelerator which is a polysiloxane compound and propylene glycol ethyl ether as a solvent in an amount of more than 88 wt% of the composition. JP 2011084639 A discloses a thermosetting composition comprising a solvent and at least one siloxane polymer, wherein the solvent is diethylene glycol methyl ethyl ether. JP 2018012806 A discloses a composition for forming an inverted pattern containing a polysiloxane and a solvent in an amount of more than 87 wt% of the composition, wherein the solvent contains polyhydric alcohol, such as propylene glycol monoethyl ether. EP 1148105 A2 discloses a composition for film formation containing a polysiloxane and an alcohol solvent in an amount of more than 90 wt% of the composition, wherein the solvent is propylene glycol monopropyl ether. US 5496402 A discloses a liquid coating composition for the formation of a siliceous coating film, which is a uniform solution comprising a polysiloxane and an organic solvent, such as ethyleneglycol dimethyl ether, ethyleneglycol diethyl ether or propyleneglycol dimethyl ether.

### SUMMARY OF THE INVENTION

### Technical Problem

In view of the above circumstances, the objects of the invention are to provide a composition which contains a TX-free environmentally friendly solvent (that is dipropylene glycol dimethyl ether) and an organopolysiloxane compound, a method for preparing such a composition, a coating material that has excellent coating properties and is able to give a smooth cured film having a good crack resistance and adhesion, and a coated article.

### Solution To The Problem

The inventors have conducted extensive investigations aimed at achieving these objects and have found as a result that the above objects can be achieved in a composition which includes, together with an organopolysiloxane having condensable functional groups, a glycol ether solvent (that is dipropylene glycol dimethyl ether). This discovery ultimately led to the present invention.

Accordingly, the present invention provides a composition containing (A) an organopolysiloxane compound having a structure of average formula (I) and a specific amount of (B) dipropylene glycol dimethyl ether, a method for preparing such a composition, a coating material and a coated article thereof, as defined in the claims.

### ADVANTAGEOUS EFFECTS OF THE INVENTION

The inventive composition contains an organopolysiloxane having polymerizable functional groups and a glycol ether solvent (that is dipropylene glycol dimethyl ether). As a result, its impact on humans and ecology and on the global environment is reduced or mitigated, in addition to which cracks and uneven coating do not readily arise in cured films (coats) thereof, making the composition useful as an environmentally friendly coating.

### DESCRIPTION OF EMBODIMENTS

The present invention is described in detail below.

### Component (A)

Component (A) of the invention is an organopolysiloxane compound having a structure of average formula (I) below.

(SiO_{4/2})ₐ(R¹SiO_{3/2})_{b}(R¹₂SiO_{2/2})_{c}(R¹₃SiO_{1/2})_{d}(R²O_{1/2})ₑ (I)

In formula (I), each R¹ is independently a hydrogen atom or an alkyl group, aralkyl group or aryl group of 1 to 8 carbon atoms which may be substituted with halogen atoms; R² is a hydrogen atom, methyl group, ethyl group, n-propyl group or i-propyl group; "a", "b", "c" and "d" are respectively numbers which satisfy the conditions 0 ≤ a < 1, 0 < b ≤ 1, 0 ≤ c < 1, 0 ≤ d < 1 and a+b+c+d = 1; and "e" is a number which satisfies the condition 0 < e ≤ 4.

The subscript "a" is a number which satisfies the condition 0 ≤ a < 1. From the standpoint of the crack suppressing effects in the resulting cured product (cured film), it is preferable for 0 ≤ a ≤ 0.3.

The subscript "b" is a number which satisfies the condition 0 < b ≤ 1. From the standpoint of the scuff resistance of the resulting cured product (cured film), it is preferable for 0.2 ≤ b ≤ 1.

The subscript "c" is a number which satisfies the condition 0 ≤ c < 1. From the standpoint of the curability of the composition and the hardness of the resulting cured product (cured film), it is preferable for 0 ≤ c ≤ 0.5.

The subscript "d" is a number which satisfies the condition 0 ≤ d < 1. From the standpoint of the curability of the composition and the hardness of the resulting cured product (cured film), it is preferable for 0 ≤ d ≤ 0.4.

The subscript "e" is a number which satisfies the condition 0 < e ≤ 4. To be effective in suppressing condensation reactions by the condensable functional groups, and also from the standpoint of the cracking resistance, water resistance and weather resistance of the resulting cured product, "e" is preferably a number that satisfies the condition 0 < e ≤ 3.

The organopolysiloxane compound (A) of the invention may be a single organopolysiloxane compound or may be a mixture of a plurality of different organopolysiloxane compounds.

The weight-average molecular weight of the organopolysiloxane compound (A) of the invention is not particularly limited, although the polystyrene-equivalent weight-average molecular weight as determined by gel permeation chromatography (GPC) is preferably from 1,000 to 500,000, and more preferably from 1,500 to 300,000. At a weight-average molecular weight below 1,000, condensation may not fully proceed and the shelf stability of the organopolysiloxane compound may decrease. Also, the condensation reaction may arise over time, and so there is a possibility that the cracking resistance may not be very good. At a high molecular weight greater than 500,000, the organopolysiloxane compound becomes insoluble in solvents and defects such as hard spots and uneven coating may arise.

The organopolysiloxane compound of the invention preferably has, excluding the solvent, etc., a nonvolatiles content of at least 90 wt%. A higher level of volatiles may worsen the appearance due to void formation during curing of the composition or may cause a decrease in the mechanical properties.

The content of component (A) (pure component (A) including no solvent) is from 10 to 85 wt%, preferably from 20 to 80 wt%, and more preferably from 60 to 80 wt%, of the composition. When the component (A) content (as nonvolatile matter) is less than 10 wt%, a cured product with a sufficient thickness after coating may not be obtainable. When it exceeds 95 wt%, the composition may not give a smooth cured product.

The organopolysiloxane compound (A) of the invention can be produced by a general method for producing organopolysiloxanes. For example, the organopolysiloxane compound of the invention can be obtained by the hydrolytic condensation of a silane compound having hydrolysable groups. The hydrolysable group-containing silane compound and the amount thereof, the solvent, the degree of hydrolysis (e.g. temperature, time, type of catalyst) and the like are suitably adjusted so as to produce an organopolysiloxane compound having a structure of average formula (I) above.

The starting material used to produce the organopolysiloxane may be any hydrolysable group-containing silane compound in which the type of hydrolysable group is a chloro or alkoxy group and the number of hydrolysable groups is one, two, three or four, and which has organic substituents that satisfy the above conditions. Specific examples of silane compounds that may be used include tetrachlorosilane, tetramethoxysilane, tetraethoxysilane, tetraisopropoxysilane, tetrabutoxysilane, methyltrichlorosilane, methyltrimethoxysilane, methyltriethoxysilane, methyltriisopropoxysilane, methyltributoxysilane, dimethyldimethoxysilane, dimethyldiethoxysilane, dimethyldiisopropoxysilane, trimethylchlorosilane, trimethylmethoxysilane, trimethylethoxysilane, trimethylisopropoxysilane, ethyltrichlorosilane, ethyltrimethoxysilane, ethyltriethoxysilane, propyltrichlorosilane, propyltrimethoxysilane, propyltriethoxysilane, butyltrichlorosilane, butyltrimethoxysilane, butyltriethoxysilane, hexyltrichlorosilane, hexyltrimethoxysilane, hexyltriethoxysilane, phenyltrichlorosilane, phenyltrimethoxysilane, phenyltriethoxysilane, cyclohexyltrichlorosilane, cyclohexyltrimethoxysilane, cyclohexyltriethoxysilane, propylmethyldichlorosilane, propylmethyldimethoxysilane, propylmethyldiethoxysilane, hexylmethyldichlorosilane, hexylmethyldimethoxysilane, hexylmethyldiethoxysilane, phenylmethyldichlorosilane, phenylmethyldimethoxysilane, phenylmethyldiethoxysilane, diphenyldichlorosilane, diphenyldimethoxysilane, diphenyldiethoxysilane, dimethylphenylchlorosilane, dimethylphenylmethoxysilane, dimethylphenylethoxysilane, and partial hydrolysates of these. However, the organosilicon compounds that may be used are not limited to these.

In terms of handleability, ease of distilling off by-products and availability of the starting material, the use of methoxysilane or ethoxysilane is more preferred. One of these silane compounds may be used alone or a mixture of two or more may be used together.

A hydrolysis catalyst may be used when carrying out hydrolysis. A known catalyst may be used as the hydrolysis catalyst, with the use of an aqueous solution thereof that has an acidity of pH 2 to 7 being desirable. In particular, acidic hydrogen halides, sulfonic acids, carboxylic acids, acidic or weakly acidic inorganic salts, and solid acids such as ion-exchange resins are preferred. Examples include hydrogen fluoride, hydrochloric acid, nitric acid, sulfuric acid, methanesulfonic acid, p-toluenesulfonic acid, formic acid, acetic acid, maleic acid, benzoic acid, lactic acid, phosphoric acid, and cation-exchange resins having sulfonic acid or carboxylic acid groups on the surface.

The amount of hydrolysis catalyst used is not particularly limited. However, to have the reaction proceed quickly and also taking into account the ease of removing the catalyst after the reaction, an amount within the range of 0.0002 to 0.5 mole per mole of hydrolysable silane is preferred.

The ratio between the amount of hydrolysable silane and the amount of water required for the hydrolytic condensation reaction is not particularly limited. However, to prevent catalyst deactivation and have the reaction proceed to a sufficient degree, and also taking into account the ease of removing water following the reaction, a ratio of from 0.1 to 10 moles of water per mole of hydrolysable silane is preferred.

The hydrolytic condensation reaction temperature is not particularly limited. However, to increase the rate of conversion and also prevent degradation of the organic functional groups on the hydrolysable silane, a temperature of between -10°C and 150°C is preferred.

At the time of the hydrolytic condensation reaction, the subsequently described solvent (B) may be used or an organic solvent other than solvent (B) may be used. Examples of the organic solvent include methanol, ethanol, propanol, acetone, methyl ethyl ketone, methyl isobutyl ketone, tetrahydrofuran, toluene and xylene. When an organic solvent other than solvent (B) has been used, it is preferable to replace it with a solvent (B) by treatment such as a stripping operation.

Following the hydrolytic condensation reaction, neutralization with an amount of synthetic hydrotalcite or the like sufficient for neutralization, followed by filtration, may be carried out.

### Component (B)

Component (B) of the invention is dipropylene glycol dimethyl ether as a solvent.

The content of component (B) is 15 to 40 wt%, of the composition. At a component (B) content below 15 wt% of the composition, a smooth cured product might not be obtained.

It is preferable for the composition of the invention to include substantially no TX solvents. As used herein, "TX solvents" refers to aromatic hydrocarbon solvents such as toluene and xylene. Also, "to include substantially no TX solvents" means that the TX solvent content is 2.0 wt% or less of the composition. The TX solvent content is preferably 0.5 wt% or less, and may be 0 wt%.

### Optional Ingredients

Optional additives may be suitably included in the composition of the invention, within ranges that do not detract from the advantageous effects of the invention.

Specific examples of such additives include tackifiers such as non-reactive silicone oils, reactive silicone oils and silane coupling agents, antidegradants, rust inhibitors, colorants, surfactants, rheology modifiers, ultraviolet absorbers, infrared absorbers, fluorescent agents, abrasives, scents, loading materials, fillers, dyes and pigments, leveling agents, reactive diluents, non-reactive polymer resins, antioxidants, ultraviolet absorbers, light stabilizers, antifoaming agents, dispersants, antistatic agents and thixotropic agents. Each of these may be of one type used alone, or two or more types may be suitably combined and used in appropriate amounts.

The viscosity of the inventive composition is not particularly limited. However, for good molding and coating workability and to suppress the occurrence of streak-like unevenness, the viscosity at 25°C as measured with a rotational viscometer is preferably not more than 100,000 mPa·s, and more preferably not more than 20,000 mPa·s. The lower limit, although not particularly defined, may be set to 10 mPa·s.

### Curable Composition

The inventive composition can be formed into a cured film by drying under room temperature and heating conditions. However, to accelerate the rate of cure or obtain excellent film properties, a curing catalyst such as a condensation curing catalyst may be added at the time that the composition is used, or a curing catalyst may additionally be included so as to give a curable composition.

The curing catalyst may be suitably selected from among known catalysts and used. Exemplary curing catalysts include organometallic compounds such as organotin compounds, organotitanium compounds, organozirconium compounds and organoaluminum compounds; inorganic acids such as hydrochloric acid and sulfuric acid; organic acids such as p-toluenesulfonic acid and various aliphatic or aromatic carboxylic acids; ammonia; inorganic bases such as sodium hydroxide; and organic bases such as tributylamine, 1,5-diazabicyclo[4.3.0]-5-nonene (DBN) and 1,8-diazabicyclo[5.4.0]-7-undecene (DBU). These may be used singly, or a plurality may be used together.

Of these, organometallic compounds selected from among organotin compounds, organotitanium compounds and organoaluminum compounds are preferred in the inventive composition. Preferred examples include dibutyltin dilaurate, dibutyltin dioctoate, dibutyltin diacetate, dioctyltin dilaurate, dioctyltin dioctoate, dioctyltin diacetate, dibutyltin bis(acetylacetate), dioctyltin bisacetyllaurate, tetrabutyl titanate, tetranonyl titanate, tetrakis(ethylene glycol) methyl ether titanate, tetrakis(ethylene glycol) ethyl ether titanate, bis(acetylacetonyl) dipropyl titanate, acetylacetone aluminum, aluminum (ethyl acetoacetate) mono-n-butyrate, aluminum ethyl acetoacetate di-n-butyrate and aluminum tris(ethyl acetoacetate). In particular, from the standpoint of the reactivity and solubility, tetrabutyl titanate, aluminum ethyl acetoacetate di-n-butyrate, aluminum bis(ethyl acetoacetate) mono-n-butyrate and hydrolysates of these are preferred.

The curing catalyst content per 100 parts by weight of the organopolysiloxane compound (A) is preferably from 0.01 to 30 parts by weight, and more preferably from 0.5 to 10 parts by weight.

### Method of Production

The method of preparing the composition of the invention is not particularly limited. The composition can be obtained by mixing together above components (A) and (B) and also any optional ingredients. In particular, in cases where a solvent that includes solvent (B) is used during hydrolytic condensation when preparing component (A), the method preferably includes, for example, the step of hydrolytically condensing a silane compound having a hydrolysable group within a solvent that includes solvent (B) so as to obtain a liquid mixture containing (A) an organopolysiloxane compound having a structure of average formula (I) and solvent (B).

The proportion of the solvent (B) within the solvent containing the solvent (B) is preferably from 20 to 100 wt%, and more preferably from 50 to 100 wt%, although the solvent used may consist solely of the solvent (B). Specific examples of organic solvents other than solvent (B) include methanol, ethanol, propanol, acetone, methyl ethyl ketone, methyl isobutyl ketone, tetrahydrofuran, toluene and xylene. When an organic solvent other than solvent (B) is used, the method of preparing the inventive composition may include the step of replacing the organic solvent with solvent (B) by treatment such as a stripping operation.

### Coating Material and Coated Article

The above-described composition of the invention can be suitably used as a coating material, particularly in exterior wall coating applications, and may be used in other applications as well. For example, by applying the inventive composition onto at least one side of a substrate --and when applying it to one side doing so either directly or over one or more other layer-- and then curing the applied composition so as to form a film, a coated article having a cured film of the coating material formed on at least one side of the substrate, either directly or over one or more other layer, can be obtained.

Examples of the substrate include, but are not particularly limited to, glass, silicon wafers, metals, plastic molded bodies, ceramics, and composites of these.

Use can also be made of any of these substrates in which the surface has been chemical conversion treated, corona discharge treated, plasma treated or treated with an acid or alkali solution, and decorative plywood in which the substrate main body and surface layer are covered with different types of coatings. The other layer or layers are exemplified by layers obtained by polyester resin coating, polyurethane resin coating, amino alkyd resin coating, lacquer coating, spray coating and aqueous wax coating.

A known technique may be suitably selected as the method for applying the coating material onto a substrate. Various types of coating methods may be used, including, for example, flow coating, spin coating, bar coating, wire bar coating, brush coating, spraying, dip coating, roll coating, curtain coating and knife coating. The coating amount is not particularly limited, although an amount such that the thickness of the film after drying is preferably from 0.1 to 1,000 µm, and more preferably from 1 to 100 µm, is generally desirable.

Examples of methods for curing the composition include room-temperature curing and heat curing.

The heating temperature, although not particularly limited, is preferably between 100°C and 300°C, and more preferably between 150°C and 250°C.

### EXAMPLES

Examples and Comparative Examples are given below to more concretely illustrate the invention.

In the Examples below, the nonvolatile content is a value measured in accordance with JIS C2133. The weight-average molecular weight is a value measured with a gel permeation chromatography (GPC) system (HLC-8220, from Tosoh Corporation) and using tetrahydrofuran (THF) as the developing solvent. Also, the values of "a" to "e" in average formula (I) were calculated from ¹H-NMR and ²⁹Si-NMR measurement results.

### [1] Preparation of Compositions Containing Solvent and Organopolysiloxane Compound

### Reference Example 1-1

Methyltrimethoxysilane (KBM-13, from Shin-Etsu Chemical Co., Ltd.) in an amount of 953.4 g (7.0 mol), 594.9 g (3.0 mol) of phenyltrimethoxysilane (KBM-103, from Shin-Etsu Chemical Co., Ltd.), 8.6 g of methanesulfonic acid and 367.4 g of diethylene glycol diethyl ether (Nippon Nyukazai Co., Ltd.) were blended in a reactor until uniform, at which point 324.0 g of deionized water was added and the mixture was stirred at 70°C for 2 hours. Neutralization was then carried out by adding 42.9 g of magnesium aluminum hydroxide carbonate hydrate (Kyowaad 500SH (Kyowa Chemical Industry Co., Ltd.) and stirring for 2 hours. Volatile constituents such as methanol were distilled off under reduced pressure, and filtration under pressure was carried out.

The resulting composition was a liquid that had a viscosity of 1,200 mPa·s, a nonvolatiles content of 71.3 wt%, a component (B) content within the composition of from 25.8 to 28.7 wt% (at least 90 wt% of the nonvolatiles content being component (B); the same applies below) and a silicone component (exclusive of the solvent) weight-average molecular weight of 12,300, and was viscous at 25°C. The values of "a" to "e" in average formula (I) were respectively a = 0, b = 1.0, c = 0, d = 0 and e = 0.18.

### Reference Example 1-2

Methyltrimethoxysilane (KBM-13, from Shin-Etsu Chemical Co., Ltd.) in an amount of 272.4 g (2.0 mol), 480.8 g (4.0 mol) of dimethyldimethoxysilane (KBM-22, from Shin-Etsu Chemical Co., Ltd.), 793.2 g (4.0 mol) of phenyltrimethoxysilane (KBM-103, from Shin-Etsu Chemical Co., Ltd.), 9.5 g of methanesulfonic acid and 406.1 g of diethylene glycol diethyl ether (Nippon Nyukazai Co., Ltd.) were blended in a reactor until uniform, at which point 280.8 g of deionized water was added and the mixture was stirred at 70°C for 2 hours. Neutralization was then carried out by adding 47.4 g of magnesium aluminum hydroxide carbonate hydrate (Kyowaad 500SH (Kyowa Chemical Industry Co., Ltd.) and stirring for 2 hours. Volatile constituents such as methanol were distilled off under reduced pressure, and filtration under pressure was carried out.

The resulting composition was a liquid that had a viscosity of 1,060 mPa·s, a nonvolatiles content of 72.2 wt%, a component (B) content within the composition of from 25.0 to 27.8 wt% and a silicone component (exclusive of the solvent) weight-average molecular weight of 2,000, and was viscous at 25°C. The values of "a" to "e" in average formula (I) were respectively a = 0, b = 0.62, c = 0.38, d = 0 and e = 0.21.

### Reference Example 1-3

Methyltrimethoxysilane (KBM-13, from Shin-Etsu Chemical Co., Ltd.) in an amount of 408.6 g (3.0 mol), 793.2 g (4.0 mol) of phenyltrimethoxysilane (KBM-103, from Shin-Etsu Chemical Co., Ltd.), 733.2 g (3.0 mol) of diphenyldimethoxysilane (KBM-202, from Shin-Etsu Chemical Co., Ltd.), 13.1 g of methanesulfonic acid and 562.8 g of diethylene glycol diethyl ether (Nippon Nyukazai Co., Ltd.) were blended in a reactor until uniform, at which point 291.6 g of deionized water was added and the mixture was stirred at 70°C for 2 hours. Neutralization was then carried out by adding 65.7 g of magnesium aluminum hydroxide carbonate hydrate (Kyowaad 500SH (Kyowa Chemical Industry Co., Ltd.) and stirring for 2 hours. Volatile constituents such as methanol were distilled off under reduced pressure, and filtration under pressure was carried out.

The resulting composition was a liquid that had a viscosity of 1,150 mPa·s, a nonvolatiles content of 72.2 wt%, a component (B) content within the composition of from 25.0 to 27.8 wt% and a silicone component (exclusive of the solvent) weight-average molecular weight of 13,000, and was viscous at 25°C. The values of "a" to "e" in average formula (I) were respectively a = 0, b = 0.69, c = 0.31, d = 0 and e = 0.24.

### Reference Example 1-4

Methyltrimethoxysilane (KBM-13, from Shin-Etsu Chemical Co., Ltd.) in an amount of 408.6 g (3.0 mol), 360.6 g (3.0 mol) of dimethyldimethoxysilane (KBM-22, from Shin-Etsu Chemical Co., Ltd.), 594.9 g (3.0 mol) of phenyltrimethoxysilane (KBM-103, from Shin-Etsu Chemical Co., Ltd.), 244.4 g (1.0 mol) of diphenyldimethoxysilane (KBM-202, from Shin-Etsu Chemical Co., Ltd.), 10.1 g of methanesulfonic acid and 432.7 g of diethylene glycol diethyl ether (Nippon Nyukazai Co., Ltd.) were blended in a reactor until uniform, at which point 280.8 g of deionized water was added and the mixture was stirred at 70°C for 2 hours. Neutralization was then carried out by adding 50.5 g of magnesium aluminum hydroxide carbonate hydrate (Kyowaad 500SH (Kyowa Chemical Industry Co., Ltd.) and stirring for 2 hours. Volatile constituents such as methanol were distilled off under reduced pressure, and filtration under pressure was carried out.

The resulting composition was a liquid that had a viscosity of 1,440 mPa·s, a nonvolatiles content of 76.5 wt%, a component (B) content within the composition of from 21.2 to 23.5 wt% and a silicone component (exclusive of the solvent) weight-average molecular weight of 6,800, and was viscous at 25°C. The values of "a" to "e" in average formula (I) were respectively a = 0, b = 0.61, c = 0.39, d = 0 and e = 0.22.

### Example 1-5

Methyltrimethoxysilane (KBM-13, from Shin-Etsu Chemical Co., Ltd.) in an amount of 953.4 g (7.0 mol), 594.9 g (3.0 mol) of phenyltrimethoxysilane (KBM-103, from Shin-Etsu Chemical Co., Ltd.), 8.6 g of methanesulfonic acid and 367.4 g of dipropylene glycol dimethyl ether (Nippon Nyukazai Co., Ltd.) were blended in a reactor until uniform, at which point 324.0 g of deionized water was added and the mixture was stirred at 70°C for 2 hours. Neutralization was then carried out by adding 42.9 g of magnesium aluminum hydroxide carbonate hydrate (Kyowaad 500SH (Kyowa Chemical Industry Co., Ltd.) and stirring for 2 hours. Volatile constituents such as methanol were distilled off under reduced pressure, and filtration under pressure was carried out.

The resulting composition was a liquid that had a viscosity of 6,500 mPa·s, a nonvolatiles content of 78.3 wt%, a component (B) content within the composition of from 19.5 to 21.7 wt% and a silicone component (exclusive of the solvent) weight-average molecular weight of 13,800, and was viscous at 25°C. The values of "a" to "e" in average formula (I) were respectively a = 0, b = 1.0, c = 0, d = 0 and e = 0.26.

### Example 1-6

Tetramethoxysilane in an amount of 76.1 g (0.5 mol), 953.4 g (7.0 mol) of methyltrimethoxysilane (KBM-13, from Shin-Etsu Chemical Co., Ltd.), 405.9 g (2.5 mol) of hexamethyldisiloxane, 9.1 g of methanesulfonic acid and 388.2 g of dipropylene glycol dimethyl ether (Nippon Nyukazai Co., Ltd.) were blended in a reactor until uniform, at which point 248.4 g of deionized water was added and the mixture was stirred at 70°C for 2 hours. Neutralization was then carried out by adding 45.3 g of magnesium aluminum hydroxide carbonate hydrate (Kyowaad 500SH (Kyowa Chemical Industry Co., Ltd.) and stirring for 2 hours. Volatile constituents such as methanol were distilled off under reduced pressure, and filtration under pressure was carried out.

The resulting composition was a liquid that had a viscosity of 4,240 mPa·s, a nonvolatiles content of 77.7 wt%, a component (B) content within the composition of from 20.1 to 22.3 wt% and a silicone component (exclusive of the solvent) weight-average molecular weight of 11,900, and was viscous at 25°C. The values of "a" to "e" in average formula (I) were respectively a = 0.06, b = 0.73, c = 0, d = 0.21 and e = 0.12.

### Reference Example 1-7

Methyltrimethoxysilane (KBM-13, from Shin-Etsu Chemical Co., Ltd.) in an amount of 953.4 g (7.0 mol), 444.6 g (3.0 mol) of vinyltrimethoxysilane (KBM-1003, from Shin-Etsu Chemical Co., Ltd.), 7.1 g of methanesulfonic acid and 303.0 g of dipropylene glycol dimethyl ether (Nippon Nyukazai Co., Ltd.) were blended in a reactor until uniform, at which point 324.0 g of deionized water was added and the mixture was stirred at 70°C for 2 hours. Neutralization was then carried out by adding 35.4 g of magnesium aluminum hydroxide carbonate hydrate (Kyowaad 500SH (Kyowa Chemical Industry Co., Ltd.) and stirring for 2 hours. Volatile constituents such as methanol were distilled off under reduced pressure, and filtration under pressure was carried out.

The resulting composition was a liquid that had a viscosity of 990 mPa·s, a nonvolatiles content of 74.5 wt%, a component (B) content within the composition of from 23.0 to 25.5 wt% and a silicone component (exclusive of the solvent) weight-average molecular weight of 4,430. The values of "a" to "e" in average formula (I) were respectively a = 0, b = 1.0, c = 0 d = 0 and e = 0.26.

### Example 1-8

Methyltrimethoxysilane (KBM-13, from Shin-Etsu Chemical Co., Ltd.) in an amount of 953.4 g (7.0 mol), 829.5 g (3.0 mol) of octyltrimethoxysilane (KBM-3083, from Shin-Etsu Chemical Co., Ltd.), 10.9 g of methanesulfonic acid and 468.0 g of dipropylene glycol dimethyl ether (Nippon Nyukazai Co., Ltd.) were blended in a reactor until uniform, at which point 324.0 g of deionized water was added and the mixture was stirred at 70°C for 2 hours. Neutralization was then carried out by adding 54.6 g of magnesium aluminum hydroxide carbonate hydrate (Kyowaad 500SH (Kyowa Chemical Industry Co., Ltd.) and stirring for 2 hours. Volatile constituents such as methanol were distilled off under reduced pressure, and filtration under pressure was carried out.

The resulting composition was a liquid that had a viscosity of 3,600 mPa·s, a nonvolatiles content of 76.2 wt%, a component (B) content within the composition of from 21.4 to 23.8 wt% and a silicone component (exclusive of the solvent) weight-average molecular weight of 8,510. The values of "a" to "e" in average formula (I) were respectively a = 0, b = 1.0, c = 0, d = 0 and e = 0.26.

### [2] Preparation of Composition Containing Solvent diethylene glycol diethyl ether (B), Curing Catalyst and Organopolysiloxane

### Reference Example 1-9

The composition was prepared by adding 5 parts by weight of the aluminum alkoxide compound DX-9740 (from Shin-Etsu Chemical Co., Ltd.; a mixture of aluminum ethyl acetoacetate di-n-butyrate and aluminum bis(ethyl acetoacetate) mono-n-butyrate) as the curing catalyst to 100 parts by weight of the organopolysiloxane composition obtained in Reference Example 1-1.

### [3] Preparation of Compositions Containing Organopolysiloxane Compound but Containing No Solvent (B)

### Comparative Example 1-1

Methyltrimethoxysilane (KBM-13, from Shin-Etsu Chemical Co., Ltd.) in an amount of 953.4 g (7.0 mol), 594.9 g (3.0 mol) of phenyltrimethoxysilane (KBM-103, from Shin-Etsu Chemical Co., Ltd.), 8.6 g of methanesulfonic acid and 367.4 g of toluene were blended in a reactor until uniform, at which point 324.0 g of deionized water was added and the mixture was stirred at 70°C for 2 hours. Neutralization was then carried out by adding 42.9 g of magnesium aluminum hydroxide carbonate hydrate (Kyowaad 500SH (Kyowa Chemical Industry Co., Ltd.) and stirring for 2 hours. Following filtration, methanol was removed by a water-washing step, and purification was carried out by filtration under pressure.

The resulting composition was a liquid that had a viscosity of 55 mPa·s, a nonvolatiles content of 72.2 wt%, a component (B) content within the composition of 0 wt% and a silicone component (exclusive of the solvent) weight-average molecular weight of 3,500. The values of "a" to "e" in average formula (I) were respectively a = 0, b = 1.0, c = 0, d = 0 and e = 0.14.

### Comparative Example 1-2

Methyltrimethoxysilane (KBM-13, from Shin-Etsu Chemical Co., Ltd.) in an amount of 272.4 g (2.0 mol), 480.8 g (4.0 mol) of dimethyldimethoxysilane (KBM-22, from Shin-Etsu Chemical Co., Ltd.), 793.2 g (4.0 mol) of phenyltrimethoxysilane (KBM-103, from Shin-Etsu Chemical Co., Ltd.), 9.5 g of methanesulfonic acid and 406.1 g of toluene were blended in a reactor until uniform, at which point 280.8 g of deionized water was added and the mixture was stirred at 70°C for 2 hours. Neutralization was then carried out by adding 47.4 g of magnesium aluminum hydroxide carbonate hydrate (Kyowaad 500SH (Kyowa Chemical Industry Co., Ltd.) and stirring for 2 hours. Following filtration, methanol was removed by a water-washing step, and purification was carried out by filtration under pressure.

The resulting composition was a liquid that had a viscosity of 80 mPa·s, a nonvolatiles content of 71.3 wt%, a component (B) content within the composition of 0 wt% and a silicone component (exclusive of the solvent) weight-average molecular weight of 1,580. The values of "a" to "e" in average formula (I) were respectively a = 0, b = 0.61, c = 0.39, d = 0 and e = 0.12.

### Comparative Example 1-3

Methyltrimethoxysilane (KBM-13, from Shin-Etsu Chemical Co., Ltd.) in an amount of 408.6 g (3.0 mol), 793.2 g (4.0 mol) of phenyltrimethoxysilane (KBM-103, from Shin-Etsu Chemical Co., Ltd.), 733.2 g (3.0 mol) of diphenyldimethoxysilane (KBM-202, from Shin-Etsu Chemical Co., Ltd.), 13.1 g of methanesulfonic acid and 562.8 g of toluene were blended in a reactor until uniform, at which point 291.6 g of deionized water was added and the mixture was stirred at 70°C for 2 hours. Neutralization was then carried out by adding 65.7 g of magnesium aluminum hydroxide carbonate hydrate (Kyowaad 500SH (Kyowa Chemical Industry Co., Ltd.) and stirring for 2 hours. Following filtration, methanol was removed by a water-washing step, and purification was carried out by filtration under pressure.

The resulting composition was a liquid that had a viscosity of 85 mPa·s, a nonvolatiles content of 71.1 wt%, a component (B) content within the composition of 0 wt% and a silicone component (exclusive of the solvent) weight-average molecular weight of 3,400. The values of "a" to "e" in average formula (I) were respectively a = 0, b = 0.69, c = 0.31, d = 0 and e = 0.13.

### Comparative Example 1-4

Methyltrimethoxysilane (KBM-13, from Shin-Etsu Chemical Co., Ltd.) in an amount of 408.6 g (3.0 mol), 360.6 g (3.0 mol) of dimethyldimethoxysilane (KBM-22, from Shin-Etsu Chemical Co., Ltd.), 594.9 g (3.0 mol) of phenyltrimethoxysilane (KBM-103, from Shin-Etsu Chemical Co., Ltd.), 244.4 g (1.0 mol) of diphenyldimethoxysilane (KBM-202, from Shin-Etsu Chemical Co., Ltd.), 10.1 g of methanesulfonic acid and 432.7 g of toluene were blended in a reactor until uniform, at which point 280.8 g of deionized water was added and the mixture was stirred at 70°C for 2 hours. Neutralization was then carried out by adding 50.5 g of magnesium aluminum hydroxide carbonate hydrate (Kyowaad 500SH (Kyowa Chemical Industry Co., Ltd.) and stirring for 2 hours. Following filtration, methanol was removed by a water-washing step, and purification was carried out by filtration under pressure.

The resulting composition was a liquid that had a viscosity of 100 mPa·s, a nonvolatiles content of 72.5 wt%, a component (B) content within the composition of 0 wt% and a silicone component (exclusive of the solvent) weight-average molecular weight of 2,300. The values of "a" to "e" in average formula (I) were respectively a = 0, b = 0.59, c = 0.41, d = 0 and e = 0.16.

### Comparative Example 1-5

Methyltrimethoxysilane (KBM-13, from Shin-Etsu Chemical Co., Ltd.) in an amount of 953.4 g (7.0 mol), 594.9 g (3.0 mol) of phenyltrimethoxysilane (KBM-103, from Shin-Etsu Chemical Co., Ltd.), 8.6 g of methanesulfonic acid and 367.4 g of toluene were blended in a reactor until uniform, at which point 324.0 g of deionized water was added and the mixture was stirred at 70°C for 2 hours. Neutralization was then carried out by adding 42.9 g of magnesium aluminum hydroxide carbonate hydrate (Kyowaad 500SH (Kyowa Chemical Industry Co., Ltd.) and stirring for 2 hours. Following filtration, methanol and toluene were removed by distillation under reduced pressure and 367.4 g of methyl ethyl ketone was added, after which purification was carried out by filtration under pressure.

The resulting composition was a liquid that had a viscosity of 41 mPa·s, a nonvolatiles content of 73.2 wt%, a component (B) content within the composition of 0 wt% and a silicone component (exclusive of the solvent) weight-average molecular weight of 2,600. The values of "a" to "e" in average formula (I) were respectively a = 0, b = 1.0, c = 0, d = 0 and e = 0.14.

### Comparative Example 1-6

Methyltrimethoxysilane (KBM-13, from Shin-Etsu Chemical Co., Ltd.) in an amount of 953.4 g (7.0 mol), 594.9 g (3.0 mol) of phenyltrimethoxysilane (KBM-103, from Shin-Etsu Chemical Co., Ltd.), 8.6 g of methanesulfonic acid and 367.4 g of toluene were blended in a reactor until uniform, at which point 324.0 g of deionized water was added and the mixture was stirred at 70°C for 2 hours. Neutralization was then carried out by adding 42.9 g of magnesium aluminum hydroxide carbonate hydrate (Kyowaad 500SH (Kyowa Chemical Industry Co., Ltd.) and stirring for 2 hours. Following filtration, methanol and toluene were removed by distillation under reduced pressure and 367.4 g of ethyl acetate was added, after which purification was carried out by filtration under pressure.

The resulting composition was a liquid that had a viscosity of 64 mPa·s, a nonvolatiles content of 75.2 wt%, a component (B) content within the composition of 0 wt% and a silicone component (exclusive of the solvent) weight-average molecular weight of 2,100. The values of "a" to "e" in average formula (I) were respectively a = 0, b = 1.0, c = 0, d = 0 and e = 0.15.

### [4] Production of Coated Articles

### Reference Examples 2-1 to 2-4, 2-7 and 2-9, Examples 2-5, 2-6 and 2-8 and Comparative Examples 2-1 to 2-6

The compositions obtained in Reference Examples 1-1 to 1-4, 1-7 and 1-9, Examples 1-5, 1-6 and 1-8, and Comparative Examples 1-1 to 1-6 were applied onto glass substrates by flow coating, and baking was carried out by heating for 2 hours in a 200°C dryer. The content of component (B) within the compositions of the Examples was 15 wt% or more.

In the resulting coated articles, the appearance of the cured film (coat) was visually evaluated and the adhesion was measured. The results are shown in Table 1.

### (1) Appearance of Cured Film

Cured films for which the film surface when visually examined was uniform and free of hard spots and cracking were rated as "OK"; those in which cracking or hard spots arose were rated as "NG."

### (2) Adhesion Test

A cross-cut test with 25 squares was carried out in accordance with JIS K5600-5-6. The results are shown in the table as (number of squares that remain and do not peel off)/25.

**Table 1**

| | Coating agent | Appearance of cured film | Adherence |
|---|---|---|---|
| Reference Example 2-1 | Reference Example 1-1 | OK | 25/25 |
| Reference Example 2-2 | Reference Example 1-2 | OK | 25/25 |
| Reference Example 2-3 | Reference Example 1-3 | OK | 25/25 |
| Reference Example 2-4 | Reference Example 1-4 | OK | 25/25 |
| Example 2-5 | Example 1-5 | OK | 25/25 |
| Example 2-6 | Example 1-6 | OK | 25/25 |
| Reference Example 2-7 | Reference Example 1-7 | OK | 25/25 |
| Example 2-8 | Example 1-8 | OK | 25/25 |
| Reference Example 2-9 | Reference Example 1-9 | OK | 25/25 |
| Comparative Example 2-1 | Comparative Example 1-1 | NG | 0/25 |
| Comparative Example 2-2 | Comparative Example 1-2 | NG | 5/25 |
| Comparative Example 2-3 | Comparative Example 1-3 | NG | 10/25 |
| Comparative Example 2-4 | Comparative Example 1-4 | NG | 10/25 |
| Comparative Example 2-5 | Comparative Example 1-5 | NG | 5/25 |
| Comparative Example 2-6 | Comparative Example 1-6 | NG | 20/25 |

As shown in Table 1, in Examples 2-5, 2-6 and 2-8 which include a solvent of dipropylene glycol dimethyl ether, coated articles were obtained in which the cured film was free of hard spots and cracks and had a good adhesion, indicating the superiority of the organopolysiloxane compounds of the invention.

## Claims

1. A composition comprising (A) an organopolysiloxane compound having a structure of the average formula (I) below and (B) 15 to 40 wt% of dipropylene glycol dimethyl ether
(SiO_{4/2})ₐ(R¹SiO_{3/2})_{b}(R¹₂SiO_{2/2})_{c}(R¹₃SiO_{1/2})_{d}(R²O_{1/2})ₑ (I)
wherein each R¹ independently is a hydrogen atom or an alkyl group, aralkyl group or aryl group of 1 to 8 carbon atoms which may be substituted with halogen atoms; R² is a hydrogen atom, methyl group, ethyl group, n-propyl group or i-propyl group; "a", "b", "c" and "d" are respectively numbers which satisfy the conditions 0 ≤ a < 1, 0 < b ≤ 1, 0 ≤ c < 1, 0 ≤ d < 1 and a+b+c+d = 1; and "e" is a number which satisfies the condition 0 < e ≤ 4.

2. The composition of claim 1, wherein the organopolysiloxane compound has a weight-average molecular weight of from 1,000 to 500,000.

3. The composition of claim 1 or 2 which is a curable composition that further comprises a curing catalyst.

4. The composition of any one of claims 1 to 3, wherein 0 ≤ a ≤ 0.3.

5. The composition of any one of claims 1 to 4, wherein 0.2 ≤ b ≤ 1.

6. The composition of any one of claims 1 to 5, wherein 0 ≤ c ≤ 0.5.

7. The composition of any one of claims 1 to 6, wherein, 0 ≤ d ≤ 0.4.

8. The composition of any one of claims 1 to 7, wherein 0 < e ≤ 3.

9. The composition of any one of claims 1 to 8, wherein the content of component (B) is from 20 to 40 wt% of the composition.

10. The composition of any one of claims 1 to 9, wherein the content of component (A) is from 20 to 80 wt%, preferably from 60 to 80 wt% of the composition.

11. The composition of any one of claims 1 to 10, wherein the composition includes substantially no aromatic hydrocarbon solvents.

12. A coating material comprising a composition of any one of claims 1 to 11.

13. A coated article comprising a substrate and, formed on at least one side of the substrate, either directly or over one or more other layer, a cured coat of a coating material of claim 12.

14. A method for preparing a composition of any one of claims 1 to 11, comprising the step of hydrolytically condensing a silane compound having a hydrolysable group in a solvent containing (B) dipropylene glycol dimethyl ether, so as to obtain a liquid mixture containing (A) the organopolysiloxane compound having the structure of average formula (I) and (B) dipropylene glycol dimethyl ether.

## Patentansprüche

1. Zusammensetzung, die (A) eine Organopolysiloxan-Verbindung mit einer Struktur der nachstehenden durchschnittlichen Formel (I) und (B) 15 bis 40 Gew.-% Dipropylenglykoldimethylether umfasst
(SiO_{4/2})ₐ(R¹SiO_{3/2})_{b}(R¹₂SiO_{2/2})_{c}(R¹₃SiO_{1/2})_{d}(R²O_{1/2})ₑ (I)
worin die R¹ jeweils unabhängig ein Wasserstoffatom oder eine Alkylgruppe, Aralkylgruppe oder Arylgruppe mit 1 bis 8 Kohlenstoffatomen sind, die gegebenenfalls mit Halogenatomen substituiert sind; R² ein Wasserstoffatom, eine Methylgruppe, Ethylgruppe, n-Propylgruppe oder Isopropylgruppe ist; "a", "b", "c" und "d" jeweils Zahlen sind, welche die Bedingungen 0 ≤ a < 1, 0 < b ≤ 1, 0 ≤ c < 1, 0 ≤ d < 1 und a+b+c+d = 1 erfüllen; und "e" eine Zahl ist, welche die Bedingung 0 < e ≤ 4 erfüllt.

2. Zusammensetzung nach Anspruch 1, wobei die Organopolysiloxan-Verbindung ein gewichtsmittleres Molekulargewicht von 1.000 bis 500.000 aufweist.

3. Zusammensetzung nach Anspruch 1 oder 2, bei der es sich um eine härtbare Zusammensetzung handelt, die weiters einen Härtungskatalysator umfasst.

4. Zusammensetzung nach einem der Ansprüche 1 bis 3, wobei 0 ≤ a ≤ 0,3 ist.

5. Zusammensetzung nach einem der Ansprüche 1 bis 4, wobei 0,2 ≤ b ≤ 1 ist.

6. Zusammensetzung nach einem der Ansprüche 1 bis 5, wobei 0 ≤ c ≤ 0,5 ist.

7. Zusammensetzung nach einem der Ansprüche 1 bis 6, wobei 0 ≤ d ≤ 0,4 ist.

8. Zusammensetzung nach einem der Ansprüche 1 bis 7, wobei 0 < e ≤ 3 ist.

9. Zusammensetzung nach einem der Ansprüche 1 bis 8, wobei der Gehalt der Komponente (B) 20 bis 40 Gew.-% der Zusammensetzung ausmacht.

10. Zusammensetzung nach einem der Ansprüche 1 bis 9, wobei der Gehalt der Komponente (A) 20 bis 80 Gew.-%, vorzugsweise 60 bis 80 Gew.-%, der Zusammensetzung ausmacht.

11. Zusammensetzung nach einem der Ansprüche 1 bis 10, wobei die Zusammensetzung im Wesentlichen keine aromatischen Kohlenwasserstoff-Lösungsmittel umfasst.

12. Beschichtungsmaterial, das eine Zusammensetzung nach einem der Ansprüche 1 bis 11 umfasst.

13. Beschichteter Gegenstand, der ein Substrat und eine gehärtete Beschichtung aus einem Beschichtungsmaterial nach Anspruch 12 umfasst, die entweder direkt oder über eine oder mehrere weitere Schicht auf zumindest einer Seite des Substrats ausgebildet ist.

14. Verfahren zur Herstellung einer Zusammensetzung nach einem der Ansprüche 1 bis 11, das den Schritt des hydrolytischen Kondensierens einer Silanverbindung, die eine hydrolysierbare Gruppe aufweist, in einem Lösungsmittel umfasst, das (B) Dipropylenglykoldimethylether umfasst, um ein flüssiges Gemisch zu erhalten, das (A) die Organopolysiloxan-Verbindung mit der Struktur der durchschnittlichen Formel (I) und (B) Dipropylenglykoldimethylether umfasst.

## Revendications

1. Composition comprenant (A) un composé d'organopolysiloxane présentant une structure de formule moyenne (I) ci-dessous et (B) de 15 à 40 % en poids d'éther diméthylique de dipropylène glycol
(SiO_{4/2})ₐ(R¹SiO_{3/2})_{b}(R¹₂SiO_{2/2})_{c}(R¹₃SiO_{1/2})_{d}(R²O_{1/2})ₑ (I)
dans laquelle chaque R¹ est indépendamment un atome d'hydrogène ou un groupe alkyle, un groupe aralkyle ou un groupe aryle de 1 à 8 atomes de carbone qui peuvent être substitués par des atomes d'halogène ; R² est un atome d'hydrogène, un groupe méthyle, un groupe éthyle, un groupe n-propyle ou un groupe i-propyle ; "a", "b", "c" et "d" sont respectivement des nombres qui satisfont les conditions 0 ≤ a < 1, 0 < b ≤ 1, 0 ≤ c < 1, 0 ≤ d < 1 et a+b+c+d = 1 ; et "e" est un nombre qui satisfait la condition 0 < e ≤ 4.

2. Composition selon la revendication 1, dans laquelle le composé d'organopolysiloxane présente un poids moléculaire moyen en poids de 1 000 à 500 000.

3. Composition selon la revendication 1 ou 2, qui est une composition durcissable qui comprend en outre un catalyseur de durcissement.

4. Composition selon l'une quelconque des revendications 1 à 3, dans laquelle 0 ≤ a ≤ 0,3.

5. Composition selon l'une quelconque des revendications 1 à 4, dans laquelle 0,2 ≤ b ≤ 1.

6. Composition selon l'une quelconque des revendications 1 à 5, dans laquelle 0 ≤ c ≤ 0,5.

7. Composition selon l'une quelconque des revendications 1 à 6, dans laquelle 0 ≤ d ≤ 0,4.

8. Composition selon l'une quelconque des revendications 1 à 7, dans lequel 0 < e ≤ 3.

9. Composition selon l'une quelconque des revendications 1 à 8, dans laquelle la teneur du composant (B) est de 20 à 40 % en poids de la composition.

10. Composition selon l'une quelconque des revendications 1 à 9, dans laquelle la teneur du composant (A) est de 20 à 80 % en poids, de préférence de 60 à 80 % en poids de la composition.

11. Composition selon l'une quelconque des revendications 1 à 10, dans laquelle la composition ne comprend sensiblement pas de solvants hydrocarbonés aromatiques.

12. Matériau de revêtement comprenant une composition selon l'une quelconque des revendications 1 à 11.

13. Article revêtu comprenant un substrat et, formé sur au moins un côté du substrat, soit directement soit au-dessus d'une ou plusieurs autres couches, un revêtement durci d'un matériau de revêtement selon la revendication 12.

14. Procédé de préparation d'une composition selon l'une quelconque des revendications 1 à 11, comprenant l'étape de condensation hydrolytique d'un composé de silane présentant un groupe hydrolysable dans un solvant contenant (B) de l'éther diméthylique de dipropylène glycol, de manière à obtenir un mélange liquide contenant (A) le composé d'organopolysiloxane présentant la structure de formule moyenne (I) et (B) de l'éther diméthylique de dipropylène glycol.
